# EUROPEAN PATENT SPECIFICATION

(11) **EP 1 096 793 B1**
(45) Date of publication and mention of the grant of the patent: **22.09.2004**
(21) Application number: 00123070.5
(22) Date of filing: 24.10.2000
(51) Int. Cl.: H04N 5/45, H04N 5/445, G06F 3/033, G09G 5/14, G06F 17/30

(54) **System, method, signal, user interface and software to display thumbnail banners**
System, Verfahren, Signal, Benutzerschnittstelle und Software zur Anzeige von Daumennagelbannern
Système, méthode, signal, interface graphique et logiciel pour afficher de bannières de type ongle du pouce

(30) Priority: 25.10.1999 US 426283
(43) Date of publication of application: 02.05.2001
(73) Proprietor: Spotware Technologies, Inc., San Diego, CA 92121-3030 (US); Gateway, Inc., North Sioux City, SD 57049-2000 (US)
(72) Inventor: Boger, Robert A., Sioux City, Iowa 51106 (US); Smith, Kim C., Austin, Texas 78717 (US); Greenwood, Jon Michel, Corona, CA 92882 (US)
(74) Representative: Viering, Jentschura & Partner

(56) References cited:
- WO-A-97/24414
- WO-A-99/11061
- US-A- 5 539 479

## Description

### FIELD OF THE INVENTION

The present invention relates generally to displaying thumbnail images and more specifically to displaying thumbnail images and information associated with the images.

### BACKGROUND OF THE INVENTION

Picture-in-picture (PIP) functionality is used to display scaled images from one television station without interrupting a program being viewed from another television station. Most medium to high end television sets currently on the market include PIP functionality. For the PIP feature of these televisions to function, a tuner must be provided for each television signal received and consequently for each image displayed. Due to economic constraints, most devices are manufactured to contain one main tuner and one tuner for PIP functionality. By studying a device's instruction booklet and spending a fair amount of time experimenting, a sophisticated user can employ an external tuner such as a video cassette recorder (VCR) as a second tuner in the event that the user's television only has one internal tuner available. However, doing so is extremely inconvenient and beyond the abilities of an average user.

Similar to the PIP concept is the concept of thumbnail images. Thumbnail images are in common use on the Internet. Specifically, thumbnail images are usually static pictures that allow a user to access an Internet web page by selecting an image. Unlike the PIP feature of televisions, thumbnail images do not require a tuner for each image due to the fact that the images are static and predefined.

Current PIP technology could be greatly enhanced if multiple thumbnail images could be displayed along with real-time PIP images. It would be even more advantageous if these thumbnail images could be periodically updated to reflect real-time content available from the thumbnail image's source. If a user could also access information and useful functions by selecting a PIP type thumbnail image, it would be extremely easy for that user to find media content regardless of its source, preview the content, find information associated with the content, and perform actions related to the content. Current PIP and thumbnail image enabled devices do not provide users the ability to easily accomplish the aforementioned tasks.

From WO 99/11061 a method and apparatus is known in which a program guide is generated comprising a number of still video pictures that represent current programming on a number of channels. Some program information may be displayed along with each of the still video pictures.

Therefore, what is needed is a user interface, signal, system, program, and method of displaying multiple thumbnail images comprising content from any of a number of sources. The method should further enable one image to include real-time content for each available tuner while allowing the remaining images to reflect the real-time content of other content sources. The method should further enable a user to access information and functions relating to each of the images via a simple selection mechanism. The method should also enable the above actions while continuing to display whatever content was originally displayed on the user's display device.

### SUMMARY OF THE INVENTION

Accordingly, the present invention provides a user interface configured to display, on at least a portion of a display, one or more thumbnail images associated with content from one of a plurality of content sources, at least one of the thumbnail images including video content from the content sources. The user interface is further configured to obtain user input for focusing on a thumbnail image of video content, and to display at least one item associated with the thumbnail image, concurrently with the thumbnail image upon focus. In a preferred embodiment of the invention, the items displayed concurrently with the thumbnail image upon focus of the thumbnail image include program information including but not limited to electronic program guide information.

The present invention also provides a method comprising the steps of displaying, on at least a portion of a display, one or more thumbnail images associated with the content from content sources of one or more content types, at least one of the thumbnail images including real-time video content from the content sources. The present invention further comprises the steps of obtaining user input for focusing on at least one of the thumbnail images of video content and displaying an item associated with the thumbnail image concurrently with the thumbnail image upon focus. In a preferred embodiment of the invention, the items displayed concurrently with the thumbnail image upon focus of the thumbnail image include program information including but not limited to electronic program guide information.

Furthermore, the present invention provides a computer readable medium having recorded thereon a program of instructions, including instructions configured to display, on at least a portion of a display, one or more thumbnail images associated with content from a plurality of content sources of one or more content types. The program of instructions is also configured to obtain user input for focusing on at least one of the thumbnail images, and to display at least one item associated with one of the thumbnail images of video content, concurrently with the thumbnail image upon focus. In a preferred embodiment of the invention, the items displayed concurrently with the thumbnail image upon focus of the thumbnail image include program information including but not limited to electronic program guide information.

Additionally, the present invention provides a signal embodied in a propagation medium comprising at least one instruction configured to display one or more thumbnail images associated with content from one of a plurality of content sources of one or more content types, at least one of the thumbnail images including video content from one of the content sources, at least one instruction configured to obtain user input for focusing on at least one of the thumbnail images of video content, and at least one instruction configured to display at least one item associated with one of the thumbnail images concurrently with the thumbnail image upon focus. In a preferred embodiment of the invention, the items displayed concurrently with the thumbnail image upon focus of the thumbnail image include program information including but not limited to electronic program guide Information.

Also, the present invention provides an information handling system comprising at least one processor, memory operably associated with the processor, and a program of instructions configured to be stored in the memory and executed by the processor. The program of instructions is configured to display, on at least a portion of a display, one or more thumbnail images associated with content from one of a plurality of content sources of one or more content types, at least one of the thumbnail images including video content from one of the content sources. The program of instructions is also configured to obtain user input for focusing on at least one of the thumbnail images of video content, and to display at least one item associated with one of the thumbnail images of video content concurrently with the thumbnail image upon focus. In a preferred embodiment of the invention, the items displayed concurrently with the thumbnail image upon focus of the thumbnail image include program information including but not limited to electronic program guide information.

A primary object of the present invention is to provide users a means for obtaining program information for content displayed as thumbnail images.

An additional object of the present invention is to provide users information associated with a focused thumbnail.

Another object of the present invention is to provide a scrollable thumbnail banner for accessing programs, displaying information, and performing program related functions.

A further object of the present invention is to provide a method of displaying program information that prevents user confusion as to which program the information refers.

An advantage of the present invention is that program information can be accessed for a channel displayed as a thumbnail image.

Another advantage of the present invention is that it provides a visual program guide for accessing programs and performing program related functions.

A further advantage of the present invention is that multiple thumbnail images can be presented without requiring a tuner for each individual thumbnail image.

A further advantage of the present invention is that tuners external to a display device can be used to display multiple real-time thumbnail images.

A further advantage of the present invention is that content from multiple content sources and types can be displayed simultaneously as thumbnail image.

### BRIEF DESCRIPTION OF THE DRAWINGS

Other objects, advantages, features and characteristics of the present invention, as well as methods, operation and functions of related elements of structure, and the combination of parts and economies of manufacture, will become apparent upon consideration of the following description and claims with reference to the accompanying drawings, all of which form a part of this specification, wherein like reference numerals designate corresponding parts in the various figures, and wherein:
FIG. 1 illustrates a block diagram showing a computer system according to a preferred embodiment of the present invention;
FIG. 2 illustrates a block diagram showing a convergence system according to a preferred embodiment of the present invention;
FIG. 3 shows the desktop of a computer operating system's user interface typically employed on a computer system as in FIGS. 1 and 2 according to a preferred embodiment of the present invention;
FIG. 4 illustrates a method of displaying program information for a thumbnail image upon focus of the image according to a preferred embodiment of the present invention;
FIG. 5 illustrates displaying thumbnail images and associated information according to a preferred embodiment of the present invention;
FIG. 6 illustrates a method of displaying program information for a tuned channel according to one embodiment of the present invention; and
FIG. 7 illustrates displaying a thumbnail image upon selection of an item from a user defined list according to a preferred embodiment of the present invention.

### DETAILED DESCRIPTION OF A PREFERRED EMBODIMENT OF THE INVENTION

In the following detailed description of the preferred embodiments, reference is made to the accompanying drawings which form a part hereof, and in which is shown by way of illustration specific preferred embodiments in which the invention may be practiced. These embodiments are described in sufficient detail to enable those skilled in the art to practice the invention, and it is to be understood that other embodiments may be utilized and that logical, mechanical and electrical changes may be made. To avoid detail not necessary to enable those skilled in the art to practice the invention, the description may omit certain information known to those skilled in the art. The following detailed description is, therefore, not to be taken in a limiting sense.

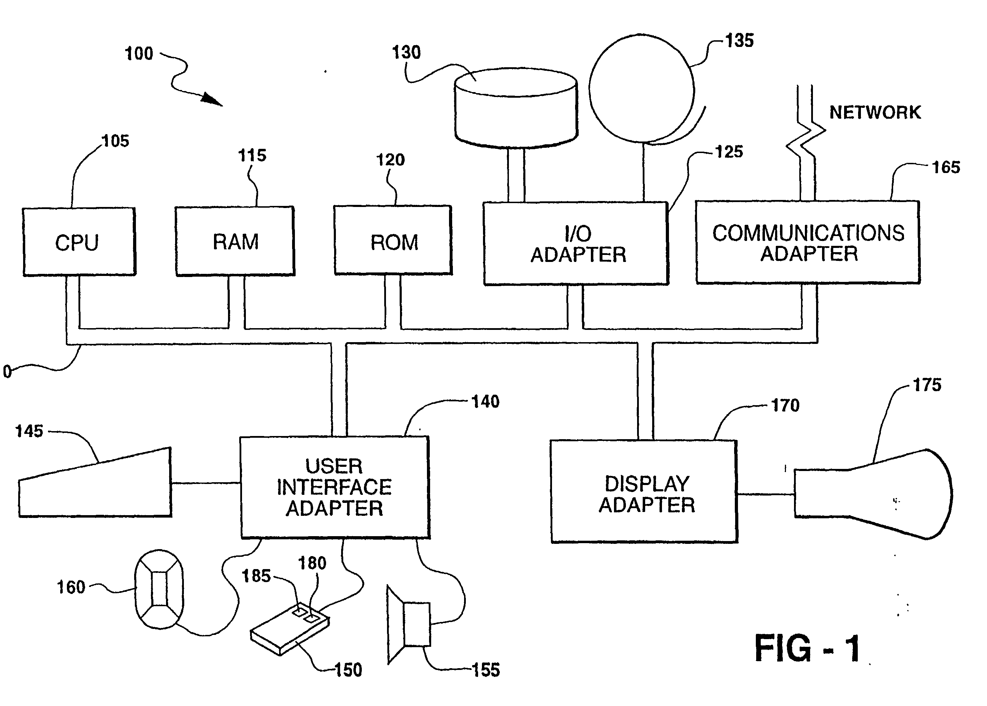

A representative hardware environment for practicing the present invention is depicted in FIG. 1 which illustrates a typical hardware configuration of an information handling system 100 in accordance with the present invention, having a central processing unit 105 such as a conventional microprocessor and a number of other units interconnected via at least one system bus 110. Information handling system 100 may be, for example, a portable or desktop Gateway computer or a Gateway Destination system (Gateway and Destination are trademarks of Gateway 2000, Inc.). Information handling system 100 shown in FIG. 1 includes random access memory (RAM) 115, read-only memory (ROM) 120 wherein the ROM 120 could also be erasable programmable read-only memory (EPROM) or electrically erasable programmable read-only memory (EEPROM), and input/output (I/O) adapter 125 for connecting peripheral devices such as disk units 130 and tape drives 135 to system bus 110, a user interface adapter 140 for connecting keyboard 145, mouse 150, speaker 155, microphone 160, and/or other user interface devices to system bus 110, communications adapter 165 for connecting information handling system 100 to an information network such as the Internet, and display adapter 170 for connecting system bus 110 to a display device such as monitor 175. Mouse 150 has a series of buttons 180, 185 and is used to control a cursor shown on monitor 175.

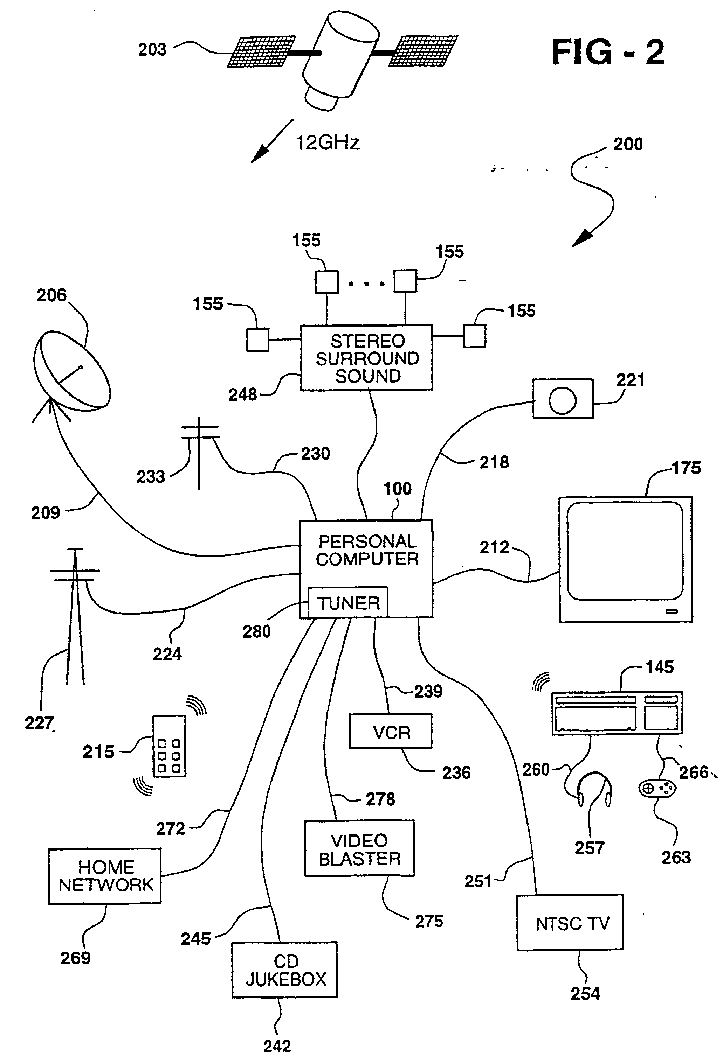

Referring next to FIG. 2, a system 200 is shown in general detail. Reference numerals or letters in FIG. 2 which are like, similar, or identical to the reference numerals or letters of FIG. 1 indicate like, similar, or identical components or features. External to system 200 is satellite 203 which, in one preferred embodiment, is a HS601 model operated by Hughes at a 101 degree west longitude geosynchronous orbital location. Satellite 203 transmits signals comprising 150 channels of modulated digital video, audio, and data at a frequency of about 12 GHZ. The satellite signals are received by system 200 by antenna 206 containing a low noise block converter amplifier. Antenna 206 is preferably about 18 inches in diameter and receives left- and right-hand circularly polarized signals between 12.2 and 12.7 GHz. Antenna 206 provides a "down converted-spectrum" signal between 950 and 1450 MHZ via a coaxial cable or other suitable communication medium 209 to information handling system 100, such as a personal computer or other system or circuitry capable of processing data. Suitable antennas 206 are already being manufactured and sold by RCA corporation by direct sales and through numerous major retail chains such as Radio Shack.

System 100 contains circuitry and software to further process signals from the antenna, generally demodulating and decoding the signal to produce a VGA (video graphics adapter) signal. The VGA signal is provided via standard VGA compatible monitor cable 212 to drive large screen data quality monitor 175 suitable for viewing in a family room or entertainment room environment. System 100 provides for user input by means of remote controls 215 and 145. Remote control 215 comprises a hand-held size device with standard television controls and a numeric keypad and, in one embodiment, video cassette recorder (VCR) controls and a pointing device. It provides radio frequency (RF) or infrared (IR) control signals received by system 100. Remote control 145 is a full function personal computer keyboard with additional standard television and VCR controls, a pointing device which is preferably in the form of a touchpad, and it also provides RF control signals to system 100. RF control signals were selected over IR or hardwired in one embodiment due to the home entertainment environment. Monitor cable 212 is a standard type cable typically used on VGA display devices and comprises up to 15 electrical conductors interfacing with monitor 175 in a D-series shell connector. In one embodiment, full multimedia sourcing and destinationing of audio/video/data (A/V/D) broadcast are provided for. Although the embodiment presented herein discusses the use of VGA signals, it should be mentioned that with an appropriate change in hardware, National Television Standard Committee (NTSC) compliant signals and NTSC compliant hardware will employ the present invention in the manner mentioned herein.

Information handling system 100 may include a tuner, tuner circuitry 280, or card capable of both tuning to multiple channels and receiving television information or signals in the form of the NTSC or Phase Alteration Line (PAL) form from any medium 116 carrying signals from satellite dish 206 which provides digital A/V/D signals from such sources as DirecTV or Primestar (DirecTV is a trademark of DirecTV, Inc., and Primestar is a trademark of Primestar Partners, L.P.). In another such embodiment, the signals carried on medium 209 provide analog A/V such as NTSC antenna signals. In another such embodiment, the signal carried on medium 218 from camera 221 provides analog A/V such as NTSC audio/video signals. In further embodiments, the signal carried on medium 224 from cable-data source 227 provides analog and/or digital A/V/D. In further such embodiments, the signal carried on medium 230 from Public Switched Telephone Network (PSTN) 233 provides data or phone signals such as integrated services digital network (ISDN) or plain old telephone system (POTS) signals. In one set of such embodiments, system 100 is programmed to automatically record analog signals, such as television programming, onto recordable media, such as a video tape in VCR 236 (which can be a digital VCR) coupled to cable 239. In another such set of embodiments, system 100 is programmed to automatically record digital signals, such as digital television programming, Digital Versatile Disk (DVD) programming, or compact disk read-only memory (CD-ROM) type audio, onto recordable media, such as recordable compact disks, in CD/DVD jukebox 242 coupled to cable 245. CD/DVD jukebox 242 also plays CDs, CD-ROMs, or DVDs for use elsewhere. In another such embodiment, signals are sent to stereo surround system 248 for audio output to one or more speakers 155, and on cable 251 to TV 254. In one such embodiment, earphones 257 on cable 260 and game pad 263 on cable 266 provide additional input/output through remote control 145. Home network 269 is "smart wiring" used to transmit data and control within the home, coupled by cable 272 to system 100. Videoblaster 275 provides video signal processing on cable/connector 278. Cables 224, 209, 230, 218, 251, 239, 278, 245, 260, and 153 can be wired coupling or wireless, such as RF or IR.

One example of convergence system 200 is the Destination System using the DestiVu user or media interface manufactured and sold by Gateway 2000, Inc. In this manner, convergence system 200 is a fully functional computer integrated with a television, providing TV viewing (via broadcast, cable, satellite, VCR, digital disk, or other broadcast media) and personal computing functionality. This convergence of computer and television enables a user combined access to both television programs and information and computer related functionality such as computer information and programs and Internet access.

Although many of today's televisions employ many of the same hardware resources employed by computers such as information handling system 100, it is possible that the present invention might be practiced in other electronic devices or networked electronic devices. For example, with the development of audio/video networking such as the recently proposed HAVi standard, television sets or other audio/video devices such as audio/video receivers and VCRs that do not themselves contain such resources could implement the present invention by using the resources of other devices on a network.

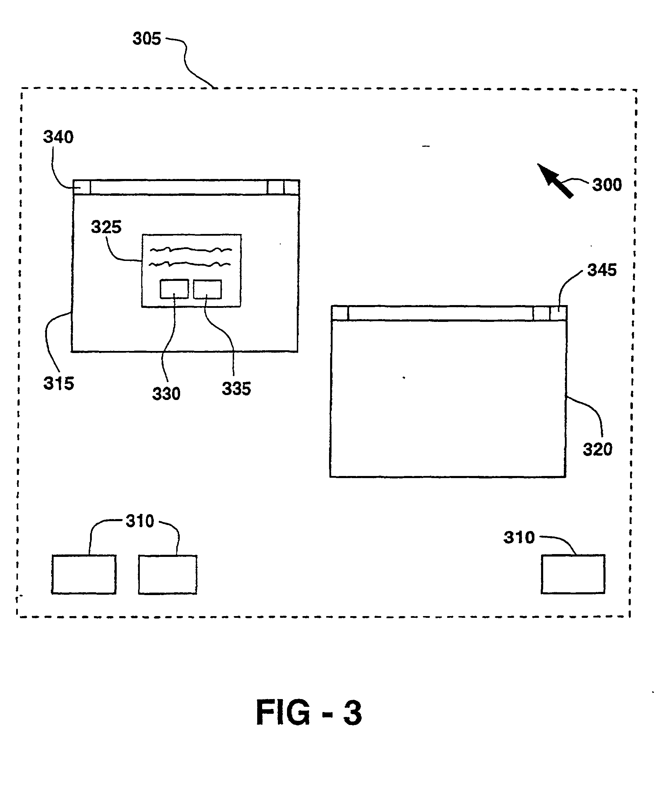

Referring next to FIG. 3, a detail of an operating system's graphical user interface, or GUI, as is typically displayed on monitor 175 in accordance with the present invention, is illustrated. Reference numerals or letters in FIG. 3 which are like, similar, or identical to the reference numerals or letters of FIGS. 1-2 indicate like, similar, or identical components or features. The operating system shown in FIG. 3 is IBM's OS/2 (OS/2 is a trademark of International Business Machines Corporation); however, the present invention will work with DestiVu, Windows 98, Windows 95 (DestiVu is a trademark of Gateway 2000 Inc. and Windows 98 and Windows 95 are trademarks of Microsoft Corporation) or any other graphical user interface. This GUI includes cursor 300, desktop 305, three icons 310, two windows 315, 320, and dialog box 325, all of which are well known in the art. Dialog box 325 further contains two buttons 330, 335. Programs are represented by the graphical user interface as either icons 310 or windows 315, 320. The horizontal region along the top of a window is called the "title bar" 340, 345. A program window 315, 320 has the "focus" when it has been designated by the user or by the operating system to receive input from keyboard 145 or mouse 150. In OS/2®, the user gives the window focus by clicking a mouse button 180, 185 when cursor 300 is inside that window. Some operating systems, however, give a window the focus merely whenever cursor 300 is present within that window. The operating system indicates which program has the focus by changing the color of the focused window's title bar 340, 345.

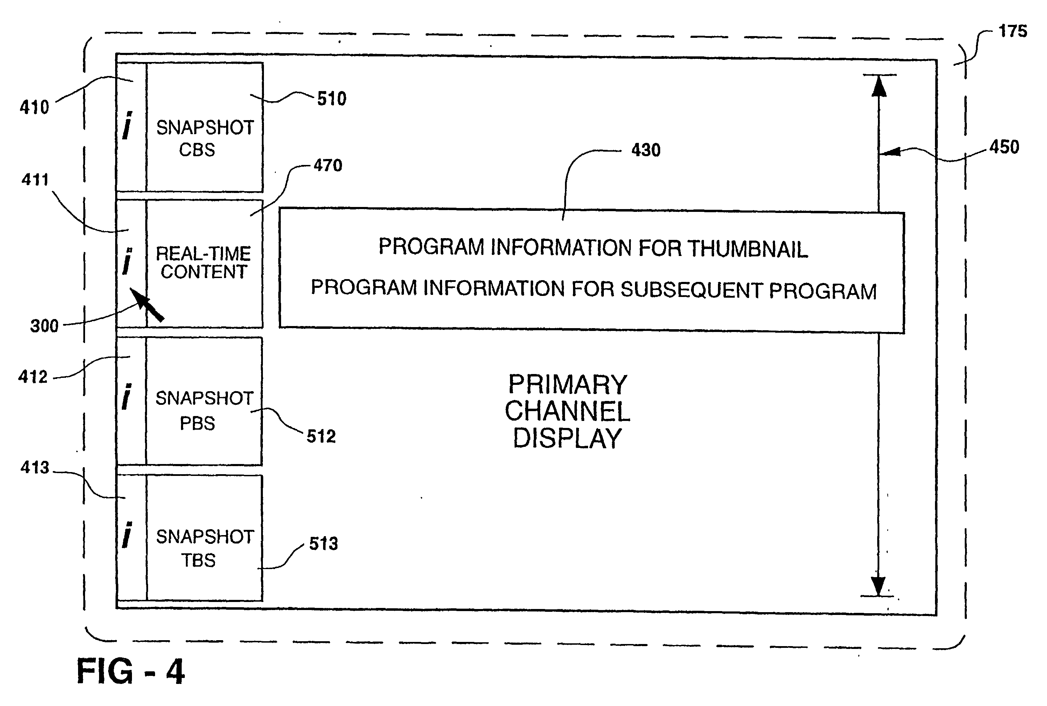

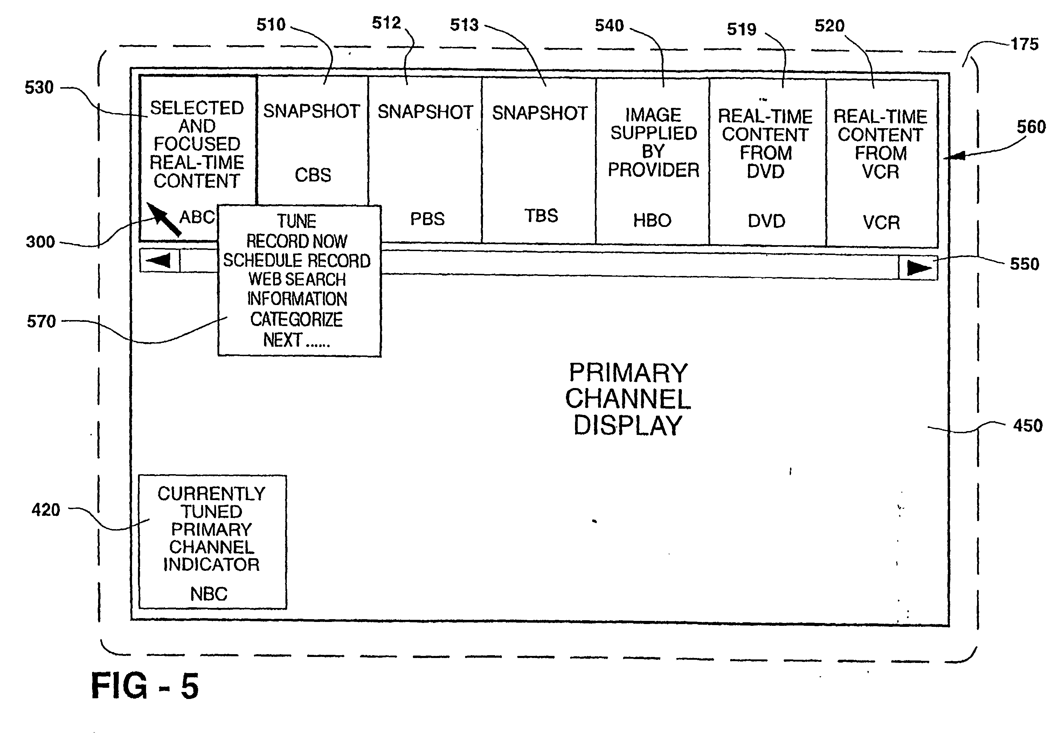

Having discussed a hardware environment in which a preferred embodiment of the present invention can be realized, a preferred embodiment of the present invention will be explained with reference to FIGS. 4-7. Reference numerals or letters in FIG. 4 which are like, similar, or identical to the reference numerals or letters of FIGS. 1-3 indicate like, similar, or identical components or features. A preferred embodiment of the present invention as illustrated in FIG. 4 includes monitor 175, and thumbnail images 510, 470, 512, and 513. Each thumbnail image 510, 470, 512, and 513 display content from one of a plurality of content sources of one or more content types. For example, content sources could include the Internet, recorded media, broadcast programs, computer generated outputs, multimedia content sources, video content sources or any other type of content source. FIG. 4 shows, by way of example only, thumbnail images 510, 512, and 513 as single frames, or "snapshots", of video content from broadcast channels CBS, PBS and TBS, respectively. Thumbnail image 470 displays real-time content as it is received by monitor 175 as opposed to single freezed frames or snapshots. It will be appreciated that other embodiments of the invention may include other thumbnail images. For example, thumbnail image types other than 510, 470, 512, and 513 are illustrated in FIG. 5, and will be discussed later.

In addition to thumbnail images 510, 470, 512, and 513, a preferred embodiment of the present invention provides hot-spots 410, 411, 412, and 413, primary channel display 450, cursor 300, and information area 430. Hot spots 410, 411, 412, and 413, although illustrated as being displayed in FIG. 4, can be any defined screen area, even if not displayed, which causes thumbnail images 510, 470, 512 or 513 to become focused when cursor 300 is moved into a position overlaying hot spots 410, 411, 412 and 413, respectively. In a preferred embodiment of the invention the areas of hot spots 410, 411, 412, 413 do not coincide with the areas occupied by thumbnail images 510, 470, 512, and 513, respectively. In another embodiment of the present invention, the areas of hot spots may coincide with the areas occupied by the thumbnail images.

Primary channel display 450, displays video content selected by a user for viewing. In a preferred embodiment of the present invention, primary channel display 450 is displayed concurrently with thumbnail images 510, 470, 512, and 513. Information area 430 displays information associated with thumbnail images 510, 470, 512, and 513. In a preferred embodiment of the invention, information area 430 is a window. Information that can be displayed in information area 430 includes, but is not limited to, program information for video content displayed in thumbnail images 510, 470, 512 and 513, program information for a subsequent program, information returned from an Internet search engine, and information from a video content database or library.

As illustrated in FIG. 4, in a preferred embodiment of the present invention, hot spots 410, 411, 412, and 413 are displayed next to thumbnail images 510, 470, 512, and 513, respectively and when a user positions cursor 300 over one of the hot spots 410, 411, 412 or 413 the corresponding thumbnail image 510, 470, 512 or 513 becomes focused. When one of the thumbnail images , 510, 470, 512 or 513 is focused on, as described above, information area 430 is displayed concurrently with the focused thumbnail image. In a preferred embodiment, information area 430 is displayed adjacent to the currently focused thumbnail image, so that there is little likelihood of confusion concerning which thumbnail image (real-time content 470 in this example) information area 430 is associated with. It will be understood that information area 430 can be displayed anywhere a user can easily correlate a focused thumbnail image with information area 430.

In addition to causing information area 430 to be displayed, focusing on thumbnail image 510, 470, 512, or 513, can alter the video content displayed in the focused thumbnail image. For example, if a user were to move cursor 300 into position over hot-spot 410, thumbnail image 510 would be focused. Upon focusing on thumbnail image 510, thumbnail image 470 would display a single video frame from its associated content source, and thumbnail image 510 would display real-time video content currently being provided by its associated content source.

Still referring to FIG. 4, after focusing on one of the thumbnail images 510, 470, 512, and 513, a preferred embodiment of the present invention provides for selecting the focused thumbnail image 470 by performing an action such as clicking mouse button 185 (illustrated in FIG. 1). It will be understood that other methods of selecting a displayed object such as thumbnail images 510, 470, 512, and 513 may be employed, and that such selection methods are well known to those skilled in the art. Selecting one of the thumbnail images 510, 470, 512 or 513 can initiate a function, or allow selection of other system functions. For example, in a preferred embodiment, selecting one of the thumbnail images 510, 470, 512 or 513 may cause the video content from the content source associated with the related thumbnail image to be displayed in primary channel display area 450. Other embodiments exist in which selecting one of the thumbnail images either initiates recording the video content associated with the selected thumbnail image, invokes an Internet search function, or sets a timer. Selection may, according to the present invention, perform system functions other than those listed. It should also be noted that, in other embodiments of the invention, focusing and selecting may be accomplished by a single user action. For example, placing cursor 300 over hot-spot 411 may both focus and select thumbnail image 470.

Referring next to FIG 5, reference numerals or letters like, similar, or identical to the reference numerals or letters of FIGS. 1-4 indicate like, similar, or identical components or features. A preferred embodiment of the present invention as illustrated in FIG. 5 utilizes monitor 175 to display thumbnail images 530, 510, 512, 513, 540, 519, and 520 in scrollable thumbnail banner 560. The illustrated embodiment also includes cursor 300, function menu 570, scroll bar 550, primary channel display 450, and primary channel indicator 420.

If a user wishes to employ the instant invention to find information about programs on channels other than the channel displayed in primary channel display 450, in addition to changing channels or using a standard EPG (not illustrated), the user may utilize picture-in-picture (PIP) type scrollable thumbnail banner 560 to display thumbnail images of content from a variety of sources. Thumbnail banner 560 may be displayed concurrently with primary channel display 450 in response to a user action, or thumbnail banner 560 may be displayed continuously. Primary channel indicator 420 may also be displayed in response to a user action, and can indicate the channel currently displayed in primary channel display 450. User actions that may initiate display of thumbnail banner 560 include, but are not limited to, selecting a menu item from within an EPG, pressing a pre-assigned button on remote control device 215 (illustrated in FIG. 2), or placing cursor 300 within a designated screen area, or hot-spot, as described in the discussion of FIG. 4.

The thumbnail images displayed in thumbnail banner 560 can be real-time content from any number of sources as illustrated by thumbnail images 519, 520, and 530; snapshots (single video frame) of content as illustrated by thumbnail images 510, 512, and 513; or images supplied by a content provider such as logos or movie trailers as illustrated by thumbnail image 540. The content of the images is not limited to the items just mentioned, and the thumbnail images could also include user defined images, advertisements, or any image that may be determined to be useful or informative.

In the present invention, thumbnail images may include content from sources other than broadcast television. In a preferred embodiment of the present invention, thumbnail images 519 and 520 are generated from non-broadcast media associated with a tuner, such as CD/DVD jukebox 242 and VCR 236 (both illustrated in FIG. 2). While not illustrated, thumbnail images of Internet content can also be displayed, as well as computer generated images, such as video games or e-mail programs to name a few.

A preferred embodiment of the present invention provides for thumbnail images to be generated for any available tuning source or content source associated with a tuner. In addition to displaying thumbnail images 510, 512, 513, 519, 520, 530, and 540, information from any of various content sources which may be associated with a focused thumbnail image can be displayed concurrently with the focused thumbnail image. The content sources can include, but are not limited to, Internet searches, broadcast media, databases, and video libraries.

The number of thumbnail images displayed in thumbnail banner 560 at any one time may be, in a preferred embodiment of the present invention, dictated by both user preference and screen size. In one embodiment of the present invention, a user preselects how many thumbnail images should be maintained in thumbnail banner 560 and what content sources the thumbnail images should be associated with. Other embodiments exist wherein all available content sources are associated with a thumbnail image. In a preferred embodiment, information associated with each thumbnail image and/or each thumbnail image's source, may be displayed with each image. If there are more thumbnail images in banner 560 than can be displayed at one time, scroll bar 550, the function of which is well known in the art, is displayed to allow users to access all available thumbnail images.

Additional features of thumbnail images 510, 512, 513, 519, 520, 530, and 540, become apparent with further explanation. Thumbnail image 530 is illustrated in FIG. 5 as being selected and focused. In one embodiment of the present invention a thumbnail image is focused any time cursor 300 is positioned over a thumbnail image. However, focusing could be implemented via a dedicated button on remote device 215 (illustrated in FIG. 2), right clicking on a thumbnail image, or numerous other methods known to those skilled in the art. Focusing, in the content of the present invention, may include displaying real-time content in a focused thumbnail image.

Recognizing that an unlimited number of tuners are not available, and that a separate tuner may be required for each PIP type thumbnail image displaying real-time images, focusing can be employed to make the most efficient use of an extra tuner. Of course, using focusing to display real-time content does not preclude other uses of focusing, such as shading or highlighting focused thumbnail images or other focused items. Nor does the fact that a preferred embodiment of the present invention displays content in real-time, imply that images can not be saved for later display.

To explain further, the main tuner of a device may be dedicated to displaying the content in primary channel display 450. A preferred embodiment of the present invention utilizes an additional tuner that can be either internal to monitor 175, or external to monitor 175, such as a tuner from a VCR 236 (illustrated in FIG. 2). The following discussion assumes that an additional internal tuner is available. When thumbnail banner 560 is first displayed utilizing one of the methods discussed earlier, the additional tuner may scan each of the content sources associated with the displayed thumbnail images. Each source is sampled long enough for the present invention to receive and store an image from that content source, and to further display the image in thumbnail banner 560. Methods for scanning content sources, saving images, and displaying images on a screen are known in the art.

Once all of the stored, or snapshot, images are displayed, the present invention may determine which thumbnail image is focused, then tune to the source associated with the focused thumbnail image. This tuning results in real-time content being displayed in the focused thumbnail image. In a preferred embodiment of the present invention, each of the sources associated with a displayed thumbnail image may be scanned periodically to ensure reasonably current thumbnail image content, and information associated with each thumbnail image can be displayed during the time an image is focused. In the event that no thumbnail image is selected for focusing, the present invention may choose a default thumbnail image for real-time display. Alternately, all displayed thumbnail images may be continually scanned, in sequence or otherwise, resulting in a pseudo-real time image. If additional tuners are available, real time thumbnail images may be generated for each of the sources associated with a tuner. Depending on the number of tuners available and the number of thumbnail images in banner 560, a scan may not need to be performed.

In addition to being focused, thumbnail image 530 is also selected. A selected thumbnail image, according to one embodiment of the present invention, may display an item associated with the content displayed in the image. Selection and focusing may be accomplished by a single user action, or separate user actions may be required. In one embodiment of the present invention, during the time a thumbnail image is being updated, it may be considered to be focused or selected. During the update, basic information about the content of that thumbnail image will be displayed. A thumbnail image may also be considered to be selected when a cursor is placed over the screen area occupied by the thumbnail image, whether or not the thumbnail image is displaying real time content. Selection and focusing may perform similar or identical functions.

In a preferred embodiment of the present invention, when a thumbnail image such as 530 is selected or focused, the present invention may display program information for a program currently airing, program information for future program, other information associated with the thumbnail image, or as illustrated in FIG. 5, function menu 570 comprising items configured to perform useful functions. These functions can include, but are not limited to, tuning primary channel display 450 to the source associated with the thumbnail image 530, recording or scheduling recording of content displayed thumbnail image 530, searching the internet for items related to displayed content, or categorizing the content, perhaps by adding the displayed content to a favorites list. Function menu 570 is only one example of the kind of item that may be displayed when a thumbnail image such as 530 is selected or focused, other items such as Internet search pages, program listings, etc can be displayed.

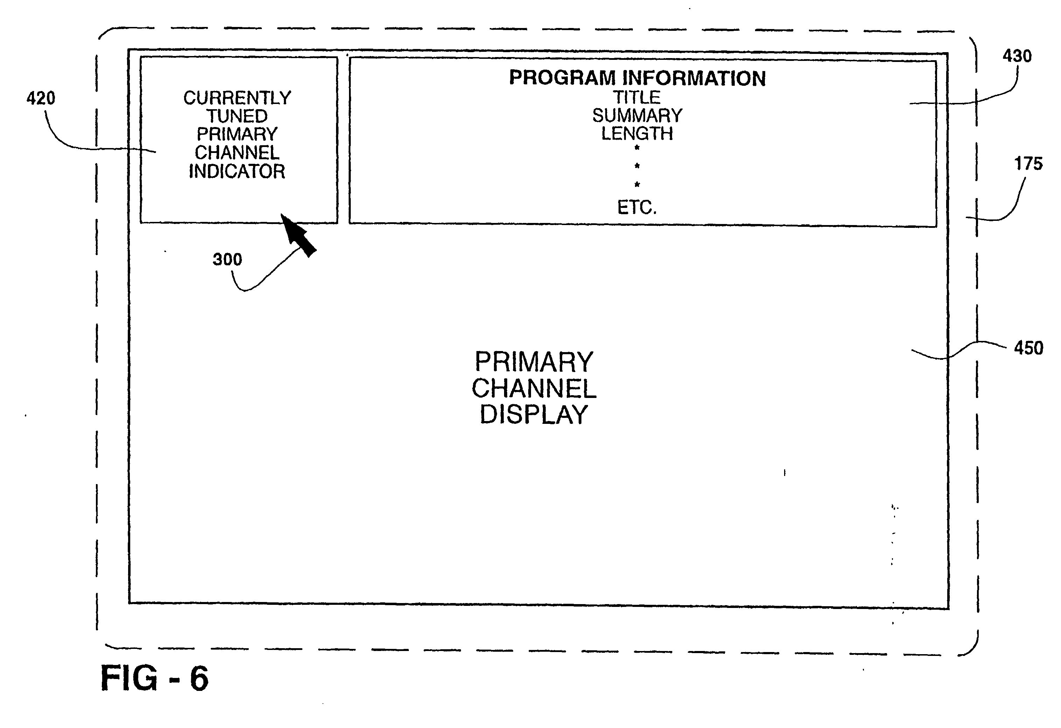

Referring next to FIG. 6, another embodiment of the present invention is shown. Reference numerals or letters in FIG. 6 which are like, similar, or identical to the reference numerals or letters of FIGS.1-5 indicate like, similar, or identical components or features. In the embodiment of the present invention illustrated in FIG. 6, primary channel display area 450 utilizes the entire available display area to permit normal media viewing. In a preferred embodiment, when a user places cursor 300 over a predetermined location, (in this illustration the upper left corner of the display), primary channel indicator 420 is displayed as a thumbnail image, along with information area 430.

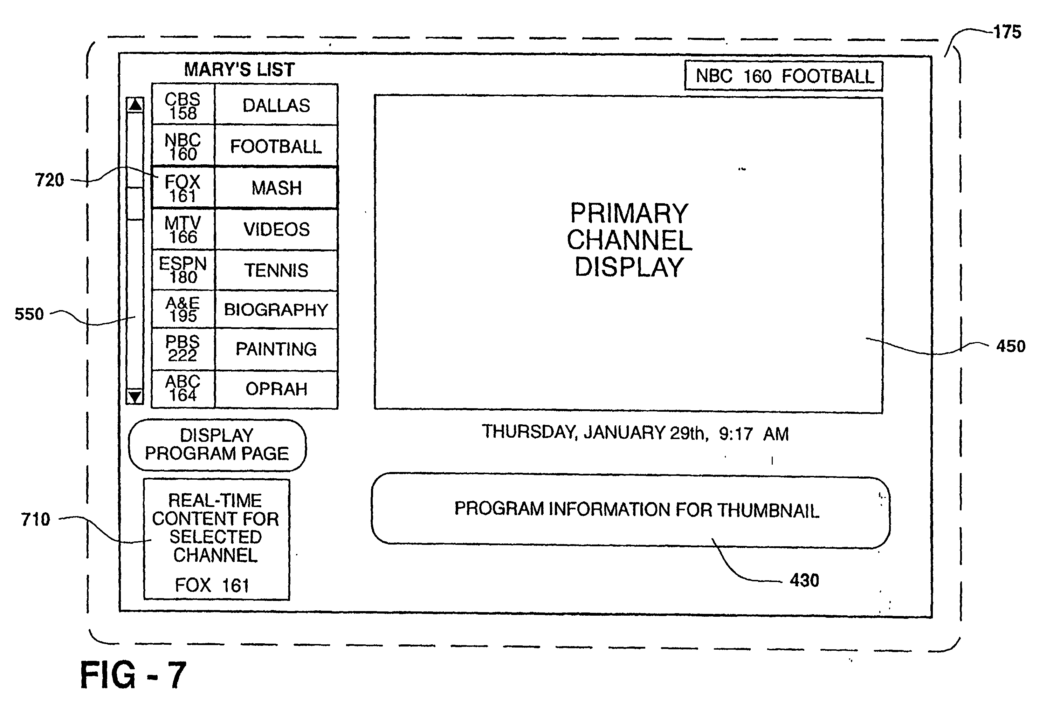

FIG. 7 illustrates an alternate embodiment of the present invention. Reference numerals or letters in FIG. 7 which are like, similar, or identical to the reference numerals or letters of FIGS. 1-6 indicate like, similar, or identical components or features. In the preferred embodiment of the present invention illustrated in FIG. 7, the thumbnail image 710 may be displayed after a particular station and program are selected. For example, suppose a user selects (or focuses) station/program item 720. Upon selection (or focus) of station/program item 720, thumbnail image 710 may display real-time content from the selected (or focused) station. Program information, or other information associated with the focused or selected station and program, may also be displayed in information area 430. The information displayed in information area 430 is not limited to program information, but may include other information, such as information returned from an Internet search engine. As in other embodiments of the present invention, primary channel display 450 could continue to display content from a primary tuning or content source.

Although the Invention has been described with a certain degree of particularity, it should be recognized that elements thereof may be altered by persons skilled in the art. One of the preferred implementations of the invention is as sets of instructions resident in the random access memory 115 of one or more computer or information handling systems configured generally as described in FIGS. 1-7. Until required by the computer system, the set of instructions may be stored in another computer readable memory, for example, in a hard disk drive or in a removable memory such as an optical disk for eventual use in a CD-ROM drive or a floppy disk for eventual use in a floppy disk drive. Further, the set of instructions can be stored in the memory of another computer and transmitted over a local area network or a wide area network, such as the Internet, where the transmitted signal could be a signal propagated through a medium such as an ISDN line, or the signal may be propagated through an air medium and received by a local satellite whereupon being transferred to the computer or information handling system of the preferred embodiment where the signal is a composite signal comprising a carrier signal, and contained within the carrier signal is the desired information confining at least one computer program instruction implementing the invention and may be downloaded as such when desired by the user. One skilled in the art would appreciate that the physical storage and/or transfer of the sets of instructions physically changes the medium upon which it is stored electrically, magnetically, or chemically so that the medium carries computer readable information. The invention is limited only by the following claims.

## Claims

1. A user interface configured to:
display, on at least a portion of a display, one or more thumbnail images associated with content from one of a plurality of content sources of one or more content types, at least one of said one or more thumbnail images including video content from said one of a plurality of content sources;
obtain, user input for focusing on at least one of said thumbnail images of video content; and
display, on at least a portion of the display at least one item associated with one of said thumbnail images of video content concurrently with said thumbnail image upon focus on said thumbnail image.

2. The interface of claim 1 further configured to:
display said one or more thumbnail images concurrently with a primary image; and
display, upon selection of one of said thumbnail images, video content associated with said one of said thumbnail images as said primary image.

3. The interface of claim 1 further configured to display said thumbnail images in response to user input.

4. The interface of claim 1 further configured to update content displayed in at least one of said thumbnail images.

5. The interface of claim 1 further configured to display one thumbnail image including continually updated content for each one of said plurality of content sources associated with a tuner.

6. A method comprising:
displaying, on at least a portion of a display, one or more thumbnail images associated with content from one of a plurality of content sources of one or more content types, at least one of said one or more thumbnail images including video content from said one of a plurality of content sources;
obtaining user input for focusing on at least one of said thumbnail images of video content; and
displaying, on at least a portion of the display, at least one item associated with one of said thumbnail images of video content concurrently with said thumbnail image upon focus on said thumbnail image.

7. The method of claim 6 further comprising:
displaying said one or more thumbnail images concurrently with a primary image; and
displaying upon selection of one of said thumbnail images, video content associated with said one of the thumbnail images as said primary image.

8. The method of claim 6 further comprising displaying said thumbnail images in response to user input.

9. The method of claim 6 further comprising updating content displayed in at least one of said thumbnail images.

10. The method of claim 6 further comprising displaying one thumbnail image including continually updated content for each one of the plurality of content sources associated with a tuner.

11. A computer readable medium having recorded thereon a program of instructions, said program of instructions including instructions configured to:
display, on at least a portion of a display, one or more thumbnail images associated with content from one of a plurality of content sources of one or more content types, at least one of said one or more thumbnail images including video content from said one of a plurality of content sources;
obtain user input for focusing on at least one of said thumbnail images of video content; and
display, on at least a portion of the display, at least one item associated with one of said thumbnail images of video content concurrently with said thumbnail image upon focus on said thumbnail image.

12. A signal embodied in a propagation medium comprising a program of instructions comprising:
at least one instruction configured to display, on at least a portion of a display, one or more thumbnail images associated with content from one of a plurality of content sources of one of more content types, at least one of said one or more thumbnail images including video content from said one of a plurality of content sources;
at least one instruction configured to obtain user input for focusing on at least one of said thumbnail images of video content; and
at least one instruction configured to display, on at least a portion of the display, at least one item associated with one of said thumbnail images of video content concurrently with said thumbnail image upon focus on said thumbnail image.

13. The signal of claim 12 or the interface of claim 1 or the method of claim 6 or the computer readable medium of claim 11 wherein said at least one item includes a menu including menu functions.

14. The signal of claim 12 wherein the program of instructions is further configured to:
display said one or more thumbnail images concurrently with a primary image; and
display, upon selection of one of said thumbnail images, video content associated with said thumbnail images as said primary image.

15. The signal of claim 12 including at least one instruction configured to display said thumbnail images in response to user input.

16. The signal of claim 12 or the computer readable medium of claim 11 further comprising at least one instruction configured to update content displayed in at least one of said thumbnail images.

17. The signal of claim 12 or the computer readable medium of claim 11 further comprising at least one instruction configured to display one thumbnail image including continually updated content for each one of said plurality of content sources associated with a tuner.

18. An information handling system comprising:
at least one processor;
memory operably associated with said processor; and
a program of instructions configured to be stored in said memory and executed by said processor, said program of instructions configured to display, on at least a portion of a display, one or more thumbnail images associated with content from one of a plurality of content sources of one or more content types, at least one of said one or more thumbnail images including video content from said one of a plurality of content sources, obtain user input for focusing on at least one of said thumbnail images of video content, and display, on at least a portion of the display, at least one item associated with one of said thumbnail images of video content concurrently with said thumbnail images upon focus on said thumbnail image.

19. The system of claim 18 or the interface of claim 1 or the method of claim 6 or the computer readable medium of claim 11 or the signal of claim 12 wherein said at least one item includes program information.

20. The system or the interface or the method or the computer readable medium or the signal of claim 19 wherein the program information includes information associated with a subsequent program.

21. The system or the interface or the method or the computer readable medium or the signal of claim 19 wherein said at least one item includes a menu including menu items.

22. The system or the interface or the method or the computer readable medium or the signal of claim 21 wherein said menu items consist of at least one of the following: recording the content with which said thumbnail image is associated, viewing program information for content with which said thumbnail image is associated, setting reminders related to the content with which said thumbnail image is associated.

23. The system of claim 18 or the computer readable medium of claim 11 wherein said program of instructions is further configured to:
display said one or more thumbnail images concurrently with a primary image; and
display, upon selection of one of said thumbnail images, video content associated with said one of said thumbnail images as said primary image.

24. The system of claim 18 or the interface of claim 1 or the method of claim 6 or the computer readable medium of claim 11 or the signal of claim 12 wherein focusing includes positioning a cursor into a position overlaying a hot spot associated with said thumbnail image.

25. The system of claim 18 or the computer readable medium of claim 11 wherein said program of instructions is further configured to display said thumbnail images in response to user input.

26. The system of claim 18 or the interface of claim 1 or the method of claim 6 or the computer readable medium of claim 11 or the signal of claim 12 wherein the number of thumbnail images displayed and the content source with which each of said number of thumbnail images is associated, are determined by user preference.

27. The system of claim 18 wherein said program of instructions is further configured to update content displayed in at least one of said thumbnail images.

28. The system of claim 18 or the interface of claim 1 or the method of claim 6 or the computer readable medium of claim 11 or the signal of claim 12 wherein said plurality of content sources consists of one or more of the following: Internet, recorded media, broadcast programs, or computer generated outputs.

29. The system of claim 18 wherein said program of instructions is further configured to display one thumbnail image including continually updated content for each one of said plurality of content sources associated with a tuner.

30. The system of claim 18 or the interface of claim 1 or the method of claim 6 or the computer readable medium of claim 11 or the signal of claim 12 wherein said thumbnail images consists of one of the following: real-time content from said one of a plurality of content sources, or an image associated with said real-time content.

## Patentansprüche

1. Nutzer-Schnittstelle, welche konfiguriert ist:
• auf mindestens einem Teil einer Anzeige, ein oder mehr Thumbnail-Bilder anzuzeigen, welche mit Inhalt aus einer von einer Mehrzahl von Inhaltsquellen von einem oder mehr Inhaltstypen assoziiert sind, wobei mindestens eines des einen oder der mehreren Thumbnail-Bilder einen Videoinhalt aus der einen von einer Mehrzahl von Inhaltsquellen aufweist;
• Nutzer-Eingabe bei Konzentration auf mindestens eines der Thumbnail-Bilder mit Videoinhalt zu erlangen; und
• mindestens ein Element, welches mit einem der Thumbnail-Bilder mit Videoinhalt assoziiert ist, gleichzeitig mit dem Thumbnail-Bild auf mindestens einem Teil der Anzeige anzuzeigen, bei Konzentration auf das Thumbnail-Bild.

2. Schnittstelle gemäß Anspruch 1, welche ferner konfiguriert ist:
• das eine oder die mehreren Thumbnail-Bilder gleichzeitig mit einem primären Bild anzuzeigen; und
• Videoinhalt, welcher mit dem einen der Thumbnail-Bilder assoziiert ist, als das primäre Bild anzuzeigen, bei Auswahl des einen der Thumbnail-Bilder.

3. Schnittstelle gemäß Anspruch 1, welche ferner konfiguriert ist, die Thumbnail-Bilder in Antwort auf Nutzer-Eingabe anzuzeigen.

4. Schnittstelle gemäß Anspruch 1, welche ferner konfiguriert ist, Inhalt, welcher in mindestens einem der Thumbnail-Bilder angezeigt ist, zu aktualisieren.

5. Schnittstelle gemäß Anspruch 1, welche ferner konfiguriert ist, ein Thumbnail-Bild anzuzeigen, welches kontinuierlich aktualisierten Inhalt für jede von der Mehrzahl von Inhaltsquellen aufweist, welche mit einem Tuner assoziiert ist.

6. Verfahren, welches aufweist:
• Anzeigen, auf mindestens einem Teil einer Anzeige, von ein oder mehr Thumbnail-Bildern, welche mit Inhalt aus einer von einer Mehrzahl von Inhaltsquellen von einem oder mehr Inhaltstypen assoziiert sind, wobei mindestens eines des einen oder der mehreren Thumbnail-Bilder einen Videoinhalt aus der einen von einer Mehrzahl von Inhaltsquellen aufweist;
• Erlangen der Nutzer-Eingabe zum Konzentrieren auf mindestens eines der Thumbnail-Bilder mit Videoinhalt; und
• Anzeigen mindestens eines Elements auf mindestens einem Teil einer Anzeige, welches mit einem der Thumbnail-Bilder mit Videoinhalt assoziiert ist, gleichzeitig mit dem Thumbnail-Bild, bei Konzentration auf das Thumbnail-Bild.

7. Verfahren gemäß Anspruch 6, welches ferner aufweist:
• Anzeigen des einen oder der mehreren Thumbnail-Bilder gleichzeitig mit einem primären Bild; und
• Anzeigen von Videoinhalt als das primäre Bild, welcher mit dem einen der Thumbnail-Bilder assoziiert ist, bei Auswahl des einen der Thumbnail-Bilder.

8. Verfahren gemäß Anspruch 6, welches ferner das Anzeigen der Thumbnail-Bilder in Antwort auf die Nutzer-Eingabe aufweist.

9. Verfahren gemäß Anspruch 6, welches ferner Aktualisieren von Inhalt aufweist, welcher in mindestens einem der Thumbnail-Bilder angezeigt wird.

10. Verfahren gemäß Anspruch 6, welches ferner das Anzeigen eines Thumbnail-Bildes, welches kontinuierlich aktualisierten Inhalt, für jede von der Mehrzahl von Inhaltsquellen aufweist, welche mit einem Tuner assoziiert ist.

11. Computerlesbares Medium, welches ein darauf gespeichertes Programm von Befehlen aufweist, wobei das Programm von Befehlen Befehle aufweist, welche konfiguriert sind:
• auf mindestens einem Teil einer Anzeige ein oder mehr Thumbnail-Bilder anzuzeigen, welche mit Inhalt aus einer von einer Mehrzahl von Inhaltsquellen von einem oder mehreren Inhaltstypen assoziiert sind, wobei mindestens eines des einen oder der mehreren Thumbnail-Bilder einen Videoinhalt aus der einen von einer Mehrzahl von Inhaltsquellen aufweist;
• Nutzer-Eingabe zum Konzentrieren auf mindestens eines der Thumbnail-Bilder mit Videoinhalt zu erlangen; und
• mindestens ein Element, welches mit einem der Thumbnail-Bilder mit Videoinhalt assoziiert ist, gleichzeitig mit dem Thumbnail-Bild auf mindestens einem Teil einer Anzeige anzuzeigen, bei Konzentration auf das Thumbnail-Bild.

12. Signal, welches in einem Ausbreitungsmedium enthalten ist, und welches ein Programm von Befehlen aufweist, welches aufweist:
• mindestens einen Befehl, welcher konfiguriert ist, auf mindestens einem Teil einer Anzeige, ein oder mehr Thumbnail-Bilder anzuzeigen, welche mit Inhalt aus einer von einer Mehrzahl von Inhaltsquellen von einem oder mehr Inhaltstypen assoziiert sind, wobei mindestens eines des einen oder der mehreren Thumbnail-Bilder einen Videoinhalt aus der einen von einer Mehrzahl von Inhaltsquellen aufweist;
• mindestens einen Befehl, welcher konfiguriert ist, Nutzer-Eingabe zum Konzentrieren auf mindestens eines der Thumbnail-Bilder mit Videoinhalt zu erlangen; und
• mindestens einen Befehl, welcher konfiguriert ist, mindestens ein Element, welches mit einem der Thumbnail-Bilder assoziiert ist, gleichzeitig mit dem Thumbnail-Bild auf mindestens einem Teil der Anzeige anzuzeigen, bei Konzentration auf das Thumbnail-Bild.

13. Signal gemäß Anspruch 12 oder Schnittstelle gemäß Anspruch 1 oder Verfahren gemäß Anspruch 6 oder computerlesbares Medium gemäß Anspruch 11, wobei mindestens ein Element ein Menü aufweist, welches Menüfunktionen aufweist.

14. Signal gemäß Anspruch 12, wobei das Programm von Befehlen ferner konfiguriert ist:
• das eine oder die mehreren Thumbnail-Bilder gleichzeitig mit einem primären Bild anzuzeigen; und
• Videoinhalt, welcher mit den Thumbnail-Bildern assoziiert ist, als primäres Bild anzuzeigen, bei Auswahl eines der Thumbnail-Bilder.

15. Signal gemäß Anspruch 12, welches mindestens einen Befehl aufweist, welcher konfiguriert ist, die Thumbnail-Bilder in Antwort auf Nutzer-Eingabe anzuzeigen.

16. Signal gemäß Anspruch 12 oder computerlesbares Medium gemäß Anspruch 11, welches ferner mindestens einen Befehl aufweist, welcher konfiguriert ist, Inhalt zu aktualisieren, welcher in mindestens einem der Thumbnail-Bilder angezeigt wird.

17. Signal gemäß Anspruch 12 oder computerlesbares Medium gemäß Anspruch 11, welches ferner mindestens einen Befehl aufweist, welcher konfiguriert ist, ein Thumbnail-Bild anzuzeigen, welches kontinuierlich aktualisierten Inhalt für jede der Mehrzahl von Inhaltsquellen aufweist, welche mit einem Tuner assoziiert ist.

18. Informationsbearbeitungs-System, welches aufweist:
• mindestens einen Prozessor;
• mit dem Prozessor betreibbar assoziierter Speicher;
• ein Programm von Befehlen, welches konfiguriert ist, in dem Speicher gespeichert zu werden und mittels des Prozessors ausgeführt zu werden, wobei das Programm von Befehlen konfiguriert ist, auf mindestens einem Teil einer Anzeige, ein oder mehr Thumbnail-Bilder anzuzeigen, welche mit Inhalt aus einer von einer Mehrzahl von Inhaltsquellen von einem oder mehreren Inhaltstypen assoziiert sind, wobei mindestens eines der einen oder der mehreren Thumbnail-Bilder einen Videoinhalt aus der einen von einer Mehrzahl von Inhaltsquellen aufweist; Nutzer-Eingabe zum Konzentrieren auf mindestens eines der Thumbnail-Bilder mit Videoinhalt zu erlangen; und mindestens ein Element, welches mit einem der Thumbnail-Bilder mit Videoinhalt assoziiert ist, gleichzeitig mit dem Thumbnail-Bild auf mindestens einem Teil einer Anzeige anzuzeigen, bei Konzentration auf das Thumbnail-Bild.

19. System gemäß Anspruch 18 oder Schnittstelle gemäß Anspruch 1 oder Verfahren gemäß Anspruch 6 oder computerlesbares Medium gemäß Anspruch 11 oder Signal gemäß Anspruch 12, wobei das mindestens eine Element Programminformationen aufweist.

20. System oder Schnittstelle oder Verfahren oder computerlesbares Medium oder Signal gemäß Anspruch 19, wobei die Programminformationen Informationen aufweisen, welche mit einem folgenden Programm assoziiert sind.

21. System oder Schnittstelle oder Verfahren oder computerlesbares Medium oder Signal gemäß Anspruch 19, wobei das mindestens eine Element ein Menü aufweist, welches Menü-Elemente aufweist.

22. System oder Schnittstelle oder Verfahren oder computerlesbares Medium oder Signal gemäß Anspruch 21, wobei die Menü-Elemente aus mindestens einem des Folgenden bestehen: Aufnehmen des Inhalts, mit welchem das Thumbnail-Bild assoziiert ist, Ansehen von Programminformationen für Inhalt, mit welchem das Thumbnail-Bild assoziiert ist, Setzen von Remindern, welche sich auf den Inhalt beziehen, mit dem das Thumbnail-Bild assoziiert ist.

23. System gemäß Anspruch 18 oder computerlesbares Medium gemäß Anspruch 11, wobei das Programm von Befehlen ferner konfiguriert ist:
• das eine oder die mehreren Thumbnail-Bilder gleichzeitig mit einem primären Bild anzuzeigen; und
• Videoinhalt, welcher mit dem einen der Thumbnail-Bilder assoziiert ist, als primäres Bild anzuzeigen, bei Auswahl eines der Thumbnail-Bilder.

24. System gemäß Anspruch 18 oder Schnittstelle gemäß Anspruch 1 oder Verfahren gemäß Anspruch 6 oder computerlesbares Medium gemäß Anspruch 11 oder Signal gemäß Anspruch 12, wobei darauf Konzentrieren Positionieren eines Kursors in einer Position aufweist, welche einen Hot-spot überlagert, welcher mit dem Thumbnail-Bild assoziiert ist.

25. System gemäß Anspruch 18 oder computerlesbares Medium gemäß Anspruch 11, wobei das Programm von Befehlen ferner konfiguriert ist, die Thumbnail-Bilder in Antwort auf Nutzer-Eingabe anzuzeigen.

26. System gemäß Anspruch 18 oder Schnittstelle gemäß Anspruch 1 oder Verfahren gemäß Anspruch 6 oder computerlesbares Medium gemäß Anspruch 11 oder Signal gemäß Anspruch 12, wobei die Anzahl von Thumbnail-Bildern, welche.angezeigt werden, und die Inhaltsquelle, mit welcher jede der Anzahl von Thumbnail-Bildern assoziiert ist, mittels Nutzer-Präferenz bestimmt werden.

27. System gemäß Anspruch 18, wobei das Programm von Befehlen ferner konfiguriert ist, Inhalt, welcher in mindestens einem der Thumbnail-Bilder angezeigt ist, zu aktualisieren.

28. System gemäß Anspruch 18 oder Schnittstelle gemäß Anspruch 1 oder Verfahren gemäß Anspruch 6 oder computerlesbares Medium gemäß Anspruch 11 oder Signal gemäß Anspruch 12, wobei die Mehrzahl von Inhaltsquellen aus einem oder mehreren des Folgenden bestehen: Internet, aufgenommen Medien, Rundfunkprogramme oder Computer erzeugte Ausgaben.

29. System gemäß Anspruch 18, wobei das Programm von Befehlen ferner konfiguriert ist, ein Thumbnail-Bild anzuzeigen, welches kontinuierlich aktualisierten Inhalt für jede der Mehrzahl von Inhaltsquellen aufweist, welche mit einem Tuner assoziiert sind.

30. System gemäß Anspruch 18 oder Schnittstelle gemäß Anspruch 1 oder Verfahren gemäß Anspruch 6 oder computerlesbares Medium gemäß Anspruch 11 oder Signal gemäß Anspruch 12, wobei die Thumbnail-Bilder aus einem des Folgenden bestehen: Echtzeit-Inhalt von der einen von einer Mehrzahl von Inhaltsquellen oder ein Bild, welches mit dem Echtzeit-Inhalt assoziiert ist.

## Revendications

1. Interface utilisateur configurée pour :
afficher, sur au moins une partie d'un affichage, une ou plusieurs vignettes associées à du contenu provenant d'une parmi une pluralité de sources de contenu d'un ou plusieurs types de contenu, au moins une de ladite ou desdites vignettes comprenant du contenu vidéo provenant de ladite une d'une pluralité de sources de contenu ;
obtenir, une entrée utilisateur pour focaliser sur au moins une desdites vignettes de contenu vidéo ; et
afficher, sur au moins une partie de l'affichage au moins un élément associé à une desdites vignettes de contenu vidéo simultanément à ladite vignette lors de la focalisation sur ladite vignette.

2. Interface selon la revendication 1, configurée en outre pour :
afficher lesdites une ou plusieurs vignettes simultanément à une image principale ; et
afficher, lors de la sélection d'une desdites vignettes, du contenu vidéo associé à ladite une desdites vignettes comme ladite image principale.

3. Interface selon la revendication 1, configurée en outre pour afficher lesdites vignettes en réponse à une entrée utilisateur.

4. Interface selon la revendication 1, configurée en outre pour mettre à jour du contenu affiché dans au moins une desdites vignettes.

5. Interface selon la revendication 1, configurée en outre pour afficher une vignette comprenant du contenu mis à jour continuellement pour chacune de ladite pluralité de sources de contenu associées à un syntoniseur (« tuner » en anglais).

6. Procédé comprenant :
l'affichage, sur au moins une partie d'un affichage, d'une ou de plusieurs vignettes associées à du contenu provenant d'une parmi une pluralité de sources de contenu d'un ou plusieurs types de contenu, au moins une de ladite ou desdites vignettes comprenant du contenu vidéo provenant de ladite une d'une pluralité de sources de contenu ;
l'obtention d'une entrée utilisateur pour focaliser sur au moins une desdites vignettes de contenu vidéo ; et
l'affichage, sur au moins une partie de l'affichage, d'au moins un élément associé à une desdites vignettes de contenu vidéo simultanément à ladite vignette lors de la focalisation sur ladite vignette.

7. Procédé selon la revendication 6, comprenant en outre :
l'affichage de ladite ou desdites vignettes simultanément à une image principale ; et
l'affichage, lors de la sélection d'une desdites vignettes, de contenu vidéo associé à ladite une des vignettes comme ladite image principale.

8. Procédé selon la revendication 6, comprenant en outre l'affichage desdites vignettes en réponse à une entrée utilisateur.

9. Procédé selon la revendication 6 comprenant en outre la mise à jour de contenu affiché dans au moins une desdites vignettes.

10. Procédé selon la revendication 6, comprenant en outre l'affichage d'une vignette comprenant du contenu mis à jour continuellement pour chacune de la pluralité de sources de contenu associées à un syntoniseur (« tuner » en anglais).

11. Support lisible par ordinateur présentant, enregistré sur celui-ci, un programme d'instructions, ledit programme d'instructions comprenant des instructions configurées pour :
afficher, sur au moins une partie d'un affichage, une ou plusieurs vignettes associées à du contenu provenant d'une parmi une pluralité de sources de contenu d'un ou plusieurs types de contenu, au moins une de ladite ou desdites vignettes comprenant du contenu vidéo provenant de ladite une d'une pluralité de sources de contenu ;
obtenir une entrée utilisateur pour focaliser sur au moins une desdites vignettes de contenu vidéo ; et
afficher, sur au moins une partie de l'affichage, au moins un élément associé à une desdites vignettes de contenu vidéo simultanément à ladite vignette lors de la focalisation sur ladite vignette.

12. Signal mis en oeuvre dans un vecteur de propagation comprenant un programme d'instructions comprenant :
au moins une instruction configurée pour afficher, sur au moins une partie d'un affichage, une ou plusieurs vignettes associées à du contenu provenant d'une parmi une pluralité de sources de contenu d'un ou plusieurs types de contenu, au moins une de ladite ou desdites vignettes comprenant du contenu vidéo provenant de ladite une d'une pluralité de sources de contenu ;
au moins une instruction configurée pour obtenir une entrée utilisateur pour focaliser sur au moins une desdites vignettes de contenu vidéo ; et
au moins une instruction configurée pour afficher, sur au moins une partie de l'affichage, au moins un élément associé à une desdites vignettes de contenu vidéo simultanément à ladite vignette lors de la focalisation sur ladite vignette.

13. Signal selon la revendication 12 ou interface selon la revendication 1 ou procédé selon la revendication 6 ou support lisible par ordinateur selon la revendication 11, dans lequel ledit au moins un élément comprend un menu comprenant des fonctions de menu.

14. Signal selon la revendication 12, dans lequel le programme d'instructions est configuré en outre pour :
afficher lesdites une ou plusieurs vignettes simultanément à une image principale ; et
afficher, lors de la sélection d'une desdites vignettes, du contenu vidéo associé auxdites vignettes comme ladite image principale.

15. Signal selon la revendication 12 comprenant au moins une instruction configurée pour afficher lesdites vignettes en réponse à une entrée utilisateur.

16. Signal selon la revendication 12 ou support lisible par ordinateur selon la revendication 11 comprenant en outre au moins une instruction configurée pour mettre à jour du contenu affiché dans au moins une desdites vignettes.

17. Signal selon la revendication 12 ou support lisible par ordinateur selon la revendication 11 comprenant en outre au moins une instruction configurée pour afficher une vignette comprenant du contenu mis en jour continuellement pour chacune de ladite pluralité de sources de contenu associées à un syntoniseur(« tuner » en anglais).

18. Système de traitement d'informations comprenant :
au moins un processeur ;
une mémoire fonctionnellement associée audit processeur ; et
un programme d'instructions configuré pour être mémorisé dans ladite mémoire et exécuté par ledit processeur, ledit programme d'instructions configuré pour afficher, sur au moins une partie d'un affichage, une ou plusieurs vignettes associées à du contenu provenant d'une parmi une pluralité de sources de contenu d'un ou plusieurs types de contenu, au moins une de ladite ou desdites vignettes comprenant du contenu vidéo provenant de ladite une d'une pluralité de sources de contenu, obtenir une entrée utilisateur pour focaliser sur au moins une desdites vignettes de contenu vidéo et afficher, sur au moins une partie de l'affichage, au moins un élément associé à une desdites vignettes de contenu vidéo simultanément auxdites vignettes lors de la focalisation sur ladite vignette.

19. Système selon la revendication 18 ou interface selon la revendication 1 ou procédé selon la revendication 6 ou support lisible par ordinateur selon la revendication 11 ou signal selon la revendication 12, dans lequel ledit au moins un élément comprend des informations de programme.

20. Système ou interface ou procédé ou support lisible par ordinateur ou signal selon la revendication 19 dans lequel les informations de programme comprennent des informations associées à un programme ultérieur.

21. Système ou interface ou procédé ou support lisible par ordinateur ou signal selon la revendication 19 dans lequel ledit au moins un élément comprend un menu comprenant des éléments de menu.

22. Système ou interface ou procédé ou support lisible par ordinateur ou signal selon la revendication 21 dans lequel lesdits éléments de menu consistent en au moins un de ce qui suit : l'enregistrement du contenu auquel ladite vignette est associée, la visualisation des informations de programme pour le contenu auquel ladite vignette est associée, la définition de mémentos concernant le contenu auquel ladite vignette est associée.

23. Système selon la revendication 18 ou support lisible par ordinateur selon la revendication 11, dans lequel ledit programme d'instructions est configuré en outre pour :
afficher ladite ou lesdites vignettes simultanément à une image principale ; et
afficher, lors de la sélection d'une desdites vignettes, du contenu vidéo associé à ladite une desdites vignettes comme ladite image principale.

24. Système selon la revendication 18 ou interface selon la revendication 1 ou procédé selon la revendication 6 ou support lisible par ordinateur selon la revendication 11 ou signal selon la revendication 12, dans lequel la focalisation comprend le positionnement d'un curseur dans une position recouvrant un point sensible associé à ladite vignette.

25. Système selon la revendication 18 ou support lisible par ordinateur selon la revendication 11 dans lequel ledit programme d'instructions est configuré en outre pour afficher lesdites vignettes en réponse à une entrée utilisateur.

26. Système selon la revendication 18 ou interface selon la revendication 1 ou procédé selon la revendication 6 ou support lisible par ordinateur selon la revendication 11 ou signal selon la revendication 12 dans lequel le nombre de vignettes affichées et la source de contenu à laquelle chacune dudit nombre de vignettes est associée, sont déterminés par des préférences de l'utilisateur.

27. Système selon la revendication 18, dans lequel ledit programme d'instructions est configuré en outre pour mettre à jour du contenu affiché dans au moins une desdites vignettes.

28. Système selon la revendication 18 ou interface selon la revendication 1 ou procédé selon la revendication 6 ou support lisible par ordinateur selon la revendication 11 ou signal selon la revendication 12 dans lequel ladite pluralité de sources de contenu consiste en un ou plusieurs de ce qui suit : Internet, un média enregistré, des programmes radiodiffusés ou des sorties générées par ordinateur.

29. Système selon la revendication 18 dans lequel ledit programme d'instructions est configuré en outre pour afficher une vignette comprenant du contenu mis à jour continuellement pour chacune de ladite pluralité de sources de contenu associées à un syntoniseur (« tuner » en anglais).

30. Système selon la revendication 18 ou interface selon la revendication 1 ou procédé selon la revendication 6 ou support lisible par ordinateur selon la revendication 11 ou signal selon la revendication 12, dans lequel lesdites vignettes consistent en un de ce qui suit : contenu en temps réel provenant de ladite une d'une pluralité de sources de contenu ou une image associée audit contenu en temps réel.
